# FASCICULE DE BREVET EUROPEEN

(11) **EP 2 285 596 B1**
(45) Date de publication et mention de la délivrance du brevet: **23.11.2011**
(21) Numéro de dépôt: 09749743.2
(22) Date de dépôt: 13.05.2009
(51) Int. Cl.: B60C 11/03

(54) **BANDE DE ROULEMENT DE PNEU POUR ENGIN DE GÉNIE CIVIL**
REIFENPROFIL FÜR BAUMASCHINE
TYRE TREAD FOR CIVIL ENGINEERING MACHINE

(30) Priorité: 20.05.2008 FR 0853249
(43) Date de publication de la demande: 23.02.2011
(73) Titulaire: Société de Technologie MICHELIN, 63000 Clermont-Ferrand (FR); MICHELIN Recherche et Technique S.A., 1763 Granges-Paccot (CH)
(72) Inventeur: CALLAMAND, Stéphane, F-63200 Marsat (FR); BIJAOUI, Denis, F-63170 Aubiere (FR)
(74) Mandataire: Diernaz, Christian
(86) Numéro de dépôt international: PCT/EP2009/055755
(87) Numéro de publication internationale: WO 2009/141253

(56) Documents cités:
- WO-A-00/00357
- WO-A-2004/110790
- DE-A1- 10 309 759
- FR-A- 1 357 078
- JP-A- 2 310 108
- JP-A- 5 169 913
- JP-A- 62 241 712

## Description

L'invention concerne les pneus pour engins de travaux de génie civil portant de très lourdes charges et plus particulièrement les bandes de roulement de tels pneus.

Les engins de travaux de génie civil sont équipés de pneus qui sont en règle générale soumis à des charges très importantes et à de fortes variations de charge.

Ces pneus sont pourvus de bandes de roulement qui présentent, par rapport aux épaisseurs des bandes de roulement des autres types de pneus, comme par exemple les pneus pour véhicules poids lourd, de grandes épaisseurs de matériau caoutchoutique qui sont très hystérétiques. Par grande épaisseur, on entend ici une épaisseur supérieure à 30 mm et pouvant aller jusqu'à une valeur de 120 mm.

En conséquence, l'effet des cycles de roulage et des cycles de variations de charge supportée induisent dans les bandes de roulement de ces pneus des températures élevées notamment dans la partie centrale des bandes de roulement.

Dans l'état de la technique, il est connu de former des canaux dits de ventilation, ces canaux de ventilation pouvant traverser d'un côté à l'autre la totalité de la bande de roulement (voir notamment le document de brevet GB 1877988) ; la fonction de tels canaux est de permettre une certaine évacuation des calories produites dans la bande par une circulation de l'air ambiant à l'intérieur desdits canaux. Le document JP-A-02310108 décrit les caractéristiques techniques du préambule de la revendication 1.

Si ce dispositif permet de réduire quelque peu le niveau thermique d'une bande de roulement, il est toutefois encore nécessaire d'augmenter l'efficacité de ce dispositif notamment sur la partie centrale des bandes de roulement de pneus pour engins de travaux génie civil dont une des particularités est d'être beaucoup plus épaisses que les bandes de roulement des autres types de pneu.

Dans ce but, il est proposé une bande de roulement de pneu pour équiper un engin de travaux génie civil. Cette bande de roulement, d'épaisseur totale E a une surface de roulement destinée à venir en contact avec le sol et comporte une partie centrale délimitée par des rainures d'orientation générale circonférentielle, ces rainures délimitant des parties latérales axialement vers l'extérieur de la partie centrale, chaque partie latérale étant pourvue d'une pluralité de rainures transversales délimitant une pluralité de blocs, les rainures transversales ayant une section transversale de surface minimale (ST) et étant réparties sensiblement de manière uniforme dans la direction circonférentielle.

Cette bande de roulement est caractérisée en ce que la partie centrale est pourvue d'une pluralité de canaux s'étendant transversalement sous la surface de roulement et traversant de part en part ladite partie centrale, chaque canal comprenant une première et une seconde extrémité, ces première et deuxième extrémités débouchant dans les rainures d'orientation générale circonférentielle, au moins une extrémité débouchant dans une rainure transversale des parties épaules, et en ce que chaque canal a une surface de section transverse (SC) au moins égale à 5 % de la surface de la section minimale (ST) de la rainure transversale dans laquelle il débouche.

Préférentiellement, la section transversale de chaque canal est supérieure ou égale à 20% et au plus égale à 30%. Pour des valeurs supérieures à 30%, il peut survenir des mécanismes qui génèrent des problèmes d'endurance des matériaux compte tenu de la réduction sensible de la rigidité à l'écrasement de la partie centrale de la bande de roulement.

La combinaison de l'invention mettant en relation un canal dans la partie centrale avec au moins une rainure transversale dans son prolongement permet d'augmenter de façon très sensible les échanges thermiques entre la matière et l'air ambiant. On passe alors d'un régime d'écoulement laminaire à un régime d'écoulement turbulent, avec un coefficient d'échange augmenté d'un facteur dix par rapport à sa valeur initiale (cas où les canaux ne sont pas prolongés par des rainures transversales). On favorise ainsi le transfert des calories générées dans la matière de la partie centrale par l'intermédiaire des surfaces délimitant les canaux, ces surfaces étant soumises à des mouvements d'air provenant des rainures transversales jouant le rôle d'entonnoirs pour favoriser le passage d'air dans les canaux.

Pour assurer une pérennité suffisante de l'effet ventilation de la partie centrale d'une bande de roulement selon l'invention, les canaux sont formés à une distance de la surface de roulement qui est supérieure à la moitié de l'épaisseur de cette partie centrale.

Préférentiellement, le tracé moyen de chaque canal de la partie centrale est sensiblement dans le prolongement de la direction moyenne de la rainure transversale dans laquelle il débouche. Par sensiblement dans le prolongement, il faut entendre ici que l'écart angulaire entre les directions moyennes de la rainure transversale et du canal associé est au plus égal à 15 degrés.

Dans une variante préférentielle de l'invention, les canaux, formés dans la partie centrale d'une bande de roulement, ont, pris deux à deux, au moins une extrémité commune, c'est-à-dire que chaque canal se raccorde par une de ses extrémités à l'extrémité d'au moins un autre canal.

Dans cette variante préférentielle, il est proposé un pneu pour engin de GC pourvu d'une bande de roulement d'épaisseur totale E et ayant une surface de roulement destinée à venir en contact avec le sol, cette bande de roulement comportant une partie centrale délimitée par des rainures d'orientation circonférentielle, ces rainures délimitant axialement vers l'extérieur des parties latérales, chaque partie latérale étant pourvue d'une pluralité de rainures transversales délimitant une pluralité de blocs.

La partie centrale est pourvue d'une pluralité de canaux s'étendant transversalement sous la surface de roulement, chaque canal ayant une section, chaque canal traversant de part en part la partie centrale pour déboucher dans les deux rainures d'orientation circonférentielle.

Cette bande de roulement est caractérisée en ce que les canaux ont, pris deux à deux, des orientations sensiblement croisées, c'est-à-dire faisant entre eux un angle moyen au moins égal à 10 degrés, et en ce que un canal se raccorde à une de ses extrémités à une extrémité d'un autre canal, une extrémité au moins de chaque canal débouchant dans une rainure transversale traversant une partie latérale de la bande.

Grâce à ces conditions préférentielles, l'efficacité de ventilation (turbulence survenant pour un diamètre de chaque canal au moins égal à 5% de la section de la rainure transversale dans laquelle ledit canal débouche) par les canaux dans la partie centrale est encore améliorée car il est créé un réseau continu de canaux permettant d'augmenter la circulation d'air à l'intérieur desdits canaux.

Préférentiellement, la section transversale de chaque canal, quelle que soit la variante considérée, est supérieure ou égale à 20% et au plus égale à 30% de la section transversale de la rainure transversale traversant une partie latérale de la bande.

Il a été trouvé que la surface de canal - c'est-à-dire la surface de paroi de canal - à créer par unité de volume (exprimée en m³ - mètre au cube) doit être préférentiellement supérieure à 1 m² (mètre au carré) afin de permettre un gain thermique suffisant. Par gain thermique suffisant, on entend ici que l'effet de la ventilation à l'intérieur de la partie centrale permet une augmentation de la vitesse de roulage de 1 km/h, ce qui est particulièrement intéressant pour des pneus de équipant des engins de travaux génie civil. Préférentiellement, cette surface d'échange est au moins égale à 4 m² par unité de volume exprimée en m³. Il a par ailleurs été observé que pour une même surface de paroi, il était plus avantageux d'avoir une grande section transversale de canal (par exemple deux canaux de diamètre 12 mm sont plus efficaces que trois canaux de diamètre 8 mm).

Bien entendu, il est possible, et cela quelle que soit la variante selon l'invention considérée, de réduire le niveau thermique de l'ensemble de la bande de roulement et notamment celle des parties latérales, en prévoyant outre la présence de canaux dans la partie centrale, la présence de canaux dans les parties épaule. Ces canaux débouchent à la fois à l'extérieur de la bande et dans une rainure d'orientation circonférentielle.

Les variantes de bande de roulement selon l'invention sont particulièrement destinées à équiper un pneu ayant une armature de carcasse surmontée radialement vers l'extérieur par une armature de sommet, cette dernière étant elle même surmontée radialement vers l'extérieur par la bande de roulement selon l'invention.

D'autres caractéristiques et avantages de l'invention ressortent de la description faite ci-après en référence aux dessins annexés qui montrent, à titre d'exemples non limitatifs, des variantes de réalisation de l'objet de l'invention.

la figure 1 montre une vue de surface d'une bande de roulement d'un pneu selon une première variante de l'invention;

la figure 2 montre une vue en coupe selon un plan de coupe repéré II-II sur la figure 1 ;

la figure 3 montre une vue en perspective d'une partie de la bande de roulement selon la première variante ;

la figure 4 montre une variante de forme de section de canal de ventilation pour bande de roulement selon l'invention ;

la figure 5 montre une vue de surface d'une bande de roulement du pneu selon une deuxième variante de l'invention ;

la figure 6 montre une vue en coupe selon un plan de coupe repéré VI-VI sur la figure 5 ;

la figure 7 montre une troisième variante de bande de roulement selon l'invention.

Pour faciliter la lecture de la description des dessins ci après, les mêmes références sont employées pour décrire des éléments de structure identiques ou similaires d'un point de vue fonctionnel.

La dimension du pneu utilisée dans la description des variantes selon l'invention et pour les essais comparatifs est 40.00 R 57.

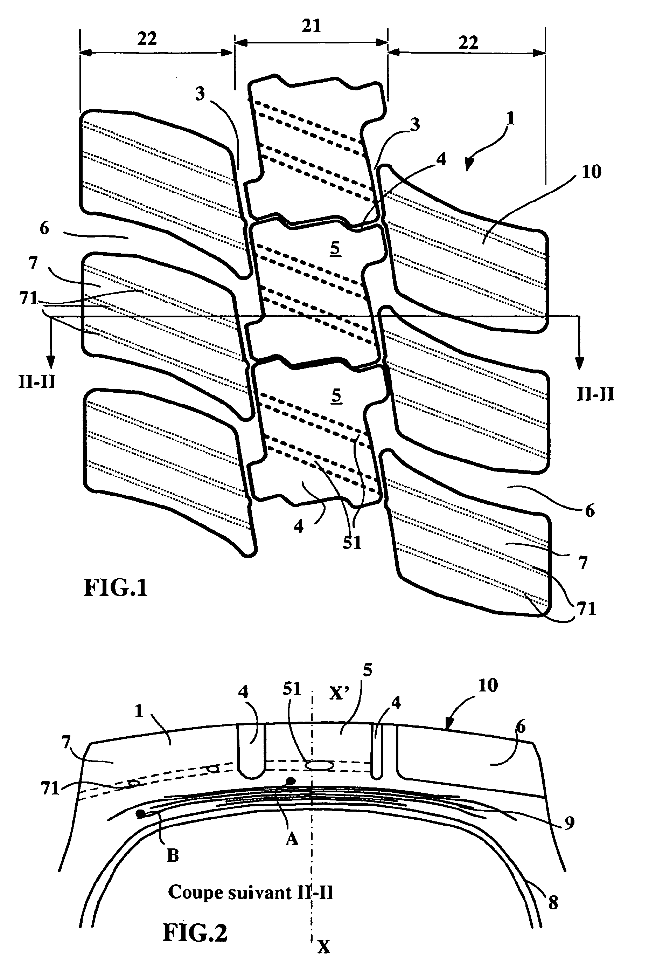

Sur la figure 1 montrant une vue partielle de la surface de roulement 10 (surface destinée à venir en contact avec le sol pendant le roulage) d'une bande de roulement 1 selon l'invention appliquée à un dessin de sculpture commercialisée sous l'appellation XDR, on distingue trois parties : une partie centrale 21 délimitée axialement par deux rainures d'orientation générale circonférentielle 3 et de part et d'autre une partie épaule 22, cette partie centrale 21 étant en outre pourvue de rainures d'orientation générale transversale 4 (c'est-à-dire sensiblement dans la direction axiale de rotation du pneu) de forme ondulée. Ces rainures transversales 4 délimitent avec les rainures circonférentielles 3 des blocs 5 massifs de forte épaisseur.

La largeur totale de la bande de roulement pour la dimension considérée est de 975 mm.

La largeur de la partie centrale est sensiblement égale à 280 mm.

La largeur moyenne des rainures circonférentielles est de 11 mm et leur profondeur 75 mm.

Les rainures transversales 4 de la partie centrale 21 ont une largeur moyenne de 8 mm et une profondeur égale à 77 mm et surface de section minimale (ST) égale dans le cas présent à 616 mm².

Axialement de part et d'autre de cette partie centrale 21, on distingue des parties épaules 22, chaque partie épaule étant pourvue de rainures transversales 6 de forme générale courbe et s'élargissant en allant vers l'extérieur de la bande (c'est-à-dire en s'éloignant axialement de la partie centrale). Les rainures transversales 6 ont une largeur minimale égale à 60 mm et une profondeur égale à 85 mm (mesure prise au point axialement le plus à l'intérieur, c'est-à-dire vers la partie centrale de la bande). Ces rainures transversales des parties épaule ont, vues en coupe transversale dans un plan perpendiculaire aux parois délimitant ces rainures, des sections minimales dont la surface est sensiblement égale à 5100 mm².

Ces rainures transversales 6 délimitent une pluralité de blocs 7 qui sont décalés circonférentiellement par rapport aux blocs 5 de la partie centrale 21. De plus, les parties épaules 22 sont orientées l'une par rapport à l'autre de manière à ce que le dessin de la bande de roulement ne soit pas directionnel. On entend ici que le dessin d'une bande est directionnel dès lors que ce dessin conduit à des sollicitations différentes en fonction du sens de rotation du pneu pourvu d'une telle bande de roulement.

Selon l'invention, les blocs 5 de la partie centrale 21 sont pourvus d'une pluralité de canaux 51 de section transversale circulaire de diamètre 24 mm, ces canaux 51 traversant de part en part ces blocs 5 pour déboucher dans les rainures circonférentielles 3. Ces canaux sont réalisés à une profondeur égale à 72% de la profondeur de rainure (c'est-à-dire à 56% de l'épaisseur de la bande). Chaque bloc 5 de la partie centrale 21 présente des dimensions telles que le volume de matière est sensiblement de 7.6 dm3 (décimètre cube). La longueur moyenne d'un canal est de 303 mm, ce qui représente pour les deux canaux une surface de paroi utile pour les échanges thermiques égale à 4.6 dm² (décimètre au carré) - cette valeur est supérieure à 0.6 dm⁻¹ de surface utile par unité de volume de bloc (c'est-à-dire supérieure à 6 m² de surface d'échange par unité de volume exprimée en m³).

Chaque canal a une surface de section transverse (SC) (égale ici à 452 mm²) soit 8.9 % (supérieure à 5%) de la surface de la section minimale (ST) de la rainure transversale dans laquelle il débouche.

En outre, chaque canal 51 de la partie centrale 21 débouche à une de ses extrémités en vis-à-vis d'une rainure transversale 6 courbe d'une partie épaule 22. Comme on le remarque la surface de la section transversale de chaque canal 51, égale à 452 mm², est inférieure à la surface de la section transversale de la rainure transversale 6 dans laquelle ce canal débouche.

Outre la présence de canaux 51 dans la partie centrale 21 comme cela vient d'être décrit, il est prévu sur chaque partie épaule 22 et dans chaque bloc 7 desdites parties épaule, plusieurs (dans le cas présent trois) canaux 71 orientés sensiblement comme les rainures transversales délimitant lesdits blocs. Ces canaux 71 ont pour fonction de réduire le niveau thermique dans les blocs 7 des parties épaule 22.

Ces canaux 71 ont une forme de section circulaire et un diamètre de 12 mm. Chaque bloc 7 des parties épaule 22 a un volume de 6.9 dm³ (pour une hauteur de bloc 7 de 0,96 dm).

Sur la figure 2 montrant une vue en coupe selon un plan de coupe repéré II-II sur la figure 1, on distingue une armature de carcasse 8 surmontée radialement vers l'extérieur par une armature de sommet 9 formée d'une pluralité de nappes de renfort empilées les unes sur les autres. Cette armature de sommet 9 est surmontée radialement vers l'extérieur par la bande de roulement 1 dont la surface de roulement 10 est montrée à la figure 1. Sur cette vue en coupe, les positions des thermocouples utilisés pour relever les températures de fonctionnement sont repérées, avec les références (A) et (B). Un point de mesure (A) est pris près de la partie médiane de la bande de roulement et au plus près de l'armature de sommet. Un deuxième point (B) est pris en extrémité de l'armature de sommet. Les relevés de température sont faits pour les conditions d'usage suivantes :

Pression de gonflage : 6 bars ; charge supportée : 48 T ; vitesses : 15, 20 km/h.

Ces mesures rassemblées dans le tableau I, permettent de comparer sur un même pneu l'incidence très favorable de la présence de canaux dans la partie centrale de la bande de roulement.

| **Tableau I** | | | | |
|---|---|---|---|---|
| 40.00 R 57 XDR | Température au point A Degré Celsius (°C) | | Température au point B Degré Celsius (°C) | |
| Vitesse (km/h) | Sans canaux | Avec canaux | Sans canaux | Avec canaux |
| 15 km/h | 86 | 74 | 86 | 78 |
| 20 km/h | 100 | 88 | 100 | 88.5 |

Comme on peut le constater, la réalisation de canaux dans la partie centrale de la bande de roulement, ces canaux débouchant à la fois dans les rainures circonférentielles et dans au moins une rainure transversale à l'épaule, permet d'atteindre un gain thermique sensible (environ 12 °C à 20 km/h au centre), autorisant par exemple une augmentation de la vitesse moyenne de roulage en utilisation. Grâce à la présence complémentaire de canaux sur les parties épaule on obtient un gain sensiblement équivalent sur les températures de fonctionnement de ces parties épaules.

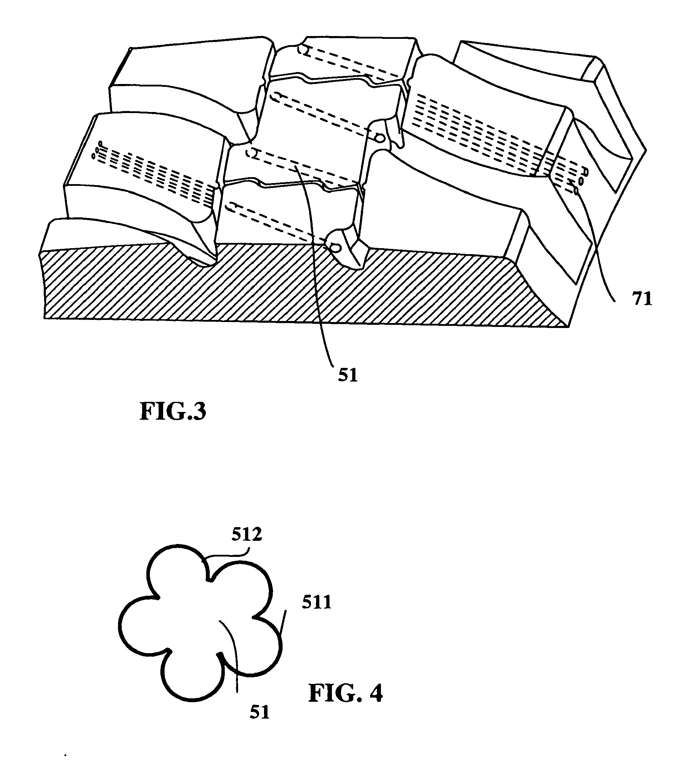

La figure 3 montre une vue perspective d'une partie de la bande de roulement selon la première variante de réalisation de l'invention. Sur les blocs de la partie centrale, les canaux 51 débouchent à leurs extrémités dans les rainures circonférentielles et une de ces extrémités débouchent également dans le prolongement d'une rainure transversale traversant une partie épaule. En outre, les blocs des parties épaules sont pourvues de trois canaux 71 débouchant à leurs deux extrémités, ces canaux étant sensiblement parallèles entre eux.

Pour augmenter les échanges thermiques entre la matière de la partie centrale 21 et l'air circulant dans les canaux 51 et ainsi obtenir un plus faible niveau de température en usage, il est judicieux d'augmenter la surface d'échange thermique surface dans chaque canal sans pour autant créer une diminution de rigidité de la partie centrale.

La figure 4 montre ainsi une variante de section de canal 51 en "marguerite" et selon lequel son contour 511 est formé d'une succession d'arcs de cercle 512 se coupant deux à deux. Cette forme particulière procure un effet avantageux puisque la surface d'échange thermique est très sensiblement augmentée sans pour autant générer une trop grande diminution de la rigidité sous charge du bloc à l'intérieur duquel est réalisé ce canal. En effet, pour un volume donné de matière absente, la surface d'échange est augmentée. La forme montrée n'est en rien limitative et toute autre forme peut être adoptée pour les canaux.

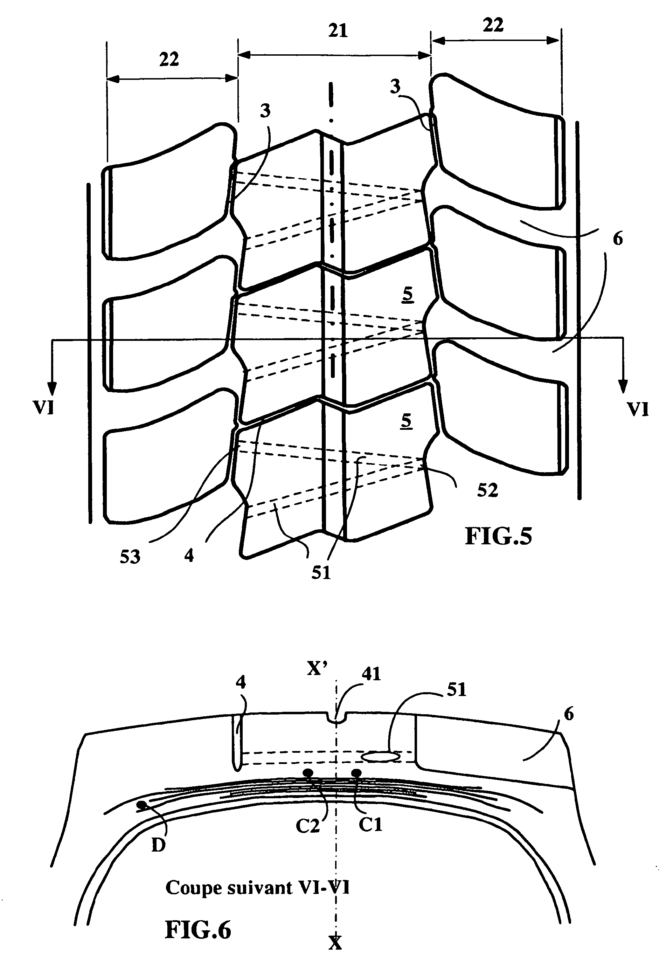

La figure 5 montre une vue partielle de la surface de roulement d'une bande de roulement selon une autre variante de l'invention appliquée à une dimension 40.00 R 57 de sculpture XDR2. Cette deuxième variante se distingue de la première variante de l'invention montrée avec les figures 1,2 et 3, en ce que le dessin des rainures transversales des parties épaule confère à la bande de roulement un caractère directionnel. Dans cette variante, les blocs de gomme 5 de la partie centrale 21 sont pourvus de deux canaux 51 sous la surface de roulement, chacun de ces canaux 51 s'étendant d'une face latérale à l'autre face latérale des blocs 5 en débouchant dans les rainures circonférentielles 4 à deux extrémités 52, 53. Les dimensions adoptées dans cette variante sont similaires à celles données pour la première variante ; notamment, les canaux 51 ont une forme cylindrique circulaire de diamètre égal à 24 mm. En outre, les deux canaux 51 d'un même bloc 5 sont connectés entre eux à l'une de leurs extrémités 52, c'est-à-dire qu'ils débouchent sur une face latérale du bloc 5 par une ouverture commune : cette disposition présente l'avantage de favoriser une continuité entre les deux canaux 51.

Comme le montre la figure 5, il a été prévu sur les blocs 5 une rainure circonférentielle additionnelle 41 de profondeur réduite par rapport à la profondeur des rainures circonférentielles 4 délimitant la partie centrale 21 (dans le cas présent, la profondeur de cette rainure additionnelle 41 est de 47 mm tandis que les rainures principales ont une profondeur moyenne de 78.5 mm). La fonction de cette rainure additionnelle est, comme cela est connu, de favoriser l'abaissement du niveau thermique de la partie centrale en usage.

La figure 6 montre une vue en coupe selon un plan de coupe repéré VI-VI de la variante montrée avec la figure 5 ; sur cette figure 6, on distingue deux canaux 51 d'un même bloc 5 débouchant par une même ouverture au droit d'une rainure transversale 7 d'une partie épaule 22.

Grâce à la présence des canaux 51 et celle de la rainure additionnelle 41 dans la partie centrale 21, les températures, mesurées dans des conditions de roulage identiques entre un pneu référence portant une même bande de roulement et un pneu portant une bande de roulement selon cette deuxième variante, indiquent clairement un gain de l'ordre de 10 à 15 degrés Celsius selon les vitesses de roulage.

Les mesures sont faites à l'aide de thermocouples implantés dans la bande de roulement aux emplacements indiqués sur les figures 5 et 6 par les références (C1, C2) au voisinage de l'armature de sommet. Les mesures sont faites avec un pneu gonflé à une pression de 6 bars, sous une charge de 48 tonnes et aux vitesses suivantes : 15, 20 km/h.

Ces mesures rassemblées dans le tableau II, permettent de comparer sur un même pneu l'incidence très favorable de la présence de canaux dans la partie centrale de la bande de roulement.

| **Tableau II** | | | | |
|---|---|---|---|---|
| 40.00 R 57 XDR2 | Température au point C1 (°C) | | Température au point C2 (°C) | |
| Vitesse (km/h) | Sans canaux | Avec canaux | Sans canaux | Avec canaux |
| 15 km/h | 92 | 84 | 89 | 84 |
| 20 km/h | 109 | 96 | 108.5 | 102 |

Complémentairement des mesures ont été faites sur la partie épaule qui est pourvue de trois canaux débouchant de part et d'autre. Ces mesures comparatives sont portées dans le tableau III.

| **Tableau III** | | |
|---|---|---|
| 40.00 R 57 XDR2 | Température au point D (°C) | |
| Vitesse (km/h) | Sans canaux | Avec canaux |
| 15 km/h | 81 | 72.5 |
| 20 km/h | 96 | 85.5 |

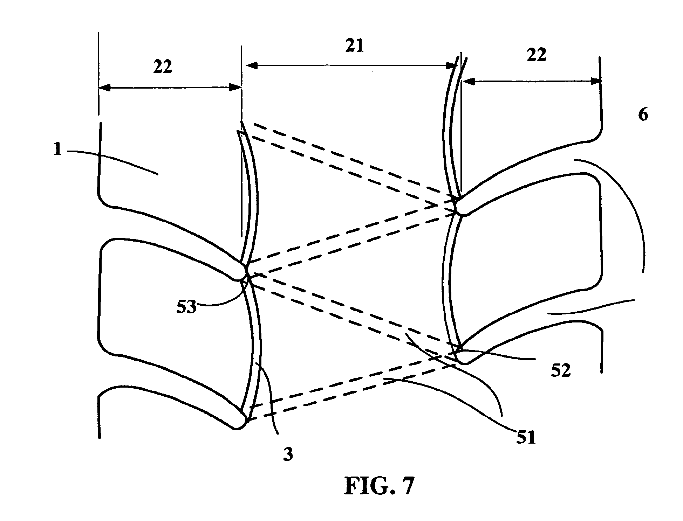

Sur une troisième variante selon l'invention montrée avec la figure 7, les canaux 51 formés dans la partie centrale 21 d'une bande de roulement 1 sont reliés les uns aux autres pour former un réseau de canaux en zigzag circonférentiellement autour du pneu : un canal se raccorde à ses deux extrémités 52, 53 à deux autres canaux. Ainsi, il y a continuité entre la totalité des canaux de la partie centrale ce qui améliore encore l'efficacité de la ventilation à l'intérieur desdits canaux. Chaque canal débouche dans deux rainures circonférentielles 3 et dans deux rainures transversales 6 aux points de connexion entre deux canaux.

Les variantes décrites et montrées ici ne sont là que pour illustrer le principe de l'invention et ne sauraient en rien limiter la portée de celle-ci.

## Revendications

1. Bande de roulement de pneu pour engin de travaux génie civil, cette bande de roulement ayant une surface de roulement (10) destinée à venir en contact avec le sol, cette bande de roulement comportant une partie centrale (21) délimitée par des rainures d'orientation générale circonférentielle (3), ces rainures délimitant des parties latérales (22) axialement vers l'extérieur de la partie centrale (21), chaque partie latérale (22) étant pourvue d'une pluralité de rainures transversales (6) délimitant une pluralité de blocs (7), les rainures transversales (6) ayant une section transversale de surface minimale et étant réparties sensiblement de manière uniforme dans la direction circonférentielle, cette bande de roulement étant **caractérisée en ce que** la partie centrale (21) est pourvue d'une pluralité de canaux (51) s'étendant transversalement sous la surface de roulement (10) et traversant de part en part ladite partie centrale (21), chaque canal (51) comprenant une première et une seconde extrémité (52, 53), ces première et deuxième extrémités débouchant dans les rainures d'orientation générale circonférentielle (3), au moins une extrémité de chaque canal débouchant dans une rainure transversale (6) des parties épaules (22), et **en ce que** chaque canal (51) a une surface de section transverse au moins égale à 5 % de la surface de la section minimale de la rainure transversale (6) dans laquelle il débouche.

2. Bande de roulement selon la revendication 1 **caractérisé en ce que** la partie centrale (21) comprend en outre une pluralité de rainures d'orientation générale transversale (4) uniformément réparties dans la direction circonférentielle et délimitant avec les rainures circonférentielles une pluralité de blocs (5), chacun de ces blocs comprenant au moins deux canaux (51) sous la surface de roulement (10), chaque canal (51) débouchant dans une rainure transversale (6) d'une partie épaule (22) et dans deux rainures circonférentielles (3).

3. Bande de roulement selon la revendication 1 ou selon la revendication 2 **caractérisé en ce que** le tracé moyen de chaque canal (51) de la partie centrale (21) est sensiblement dans le prolongement de la direction moyenne de la rainure transversale (6) dans laquelle il débouche, afin que l'écart angulaire entre les directions moyennes de la rainure transversale et du canal soit au plus égal à 15 degrés.

4. Bande de roulement selon la revendication 1 **caractérisé en ce que** les canaux (51) ont, pris deux à deux, des orientations sensiblement croisées, c'est-à-dire faisant entre elles un angle moyen au moins égal à 10 degrés, et **en ce qu'**un canal se raccorde à une de ses extrémités (52, 53) à une extrémité d'un autre canal de manière à créer une continuité des volumes d'air circulant à travers ces canaux raccordés entre eux.

5. Bande de roulement selon l'une des revendications 1 à 4 **caractérisé en ce que** la surface de paroi des canaux dans la partie centrale est au moins égale à 0.6 dm² par unité de volume de bloc exprimée en dm³.

6. Bande de roulement selon l'une des revendications 1 à 5 **caractérisé en ce que** les canaux (51) sont formés à une distance de la surface de roulement (10) qui est supérieure à la moitié de l'épaisseur de cette partie centrale (21) de la bande de roulement de façon à être au plus près de l'armature de sommet.

7. Bande de roulement selon l'une des revendications 1 à 6 **caractérisé en ce que** la surface de la section transversale de chaque canal est supérieure ou égale à 20% et au plus égale à 30% de la surface de la section transversale de la rainure transversale dans laquelle le canal débouche.

8. Bande de roulement selon l'une quelconque des revendications 1 à 7 **caractérisé en ce que** les parties épaules (22) sont pourvues d'une pluralité de canaux (71) débouchant à la fois à l'extérieur de la bande et dans une rainure circonférentielle (3) délimitant une partie épaule.

9. Bande de roulement selon la revendication 8 **caractérisé en ce que** le nombre de canaux (71) formés dans les parties épaules (22) est supérieur au nombre de canaux formés sur la partie centrale.

10. Pneu pour engin de travaux génie civil ayant une armature de carcasse (8) surmontée radialement vers l'extérieur par une armature de sommet (9) cette dernière étant elle même surmontée radialement vers l'extérieur par une bande de roulement (1), ce pneu étant **caractérisé en ce qu'**il comprend une bande de roulement définie selon l'une quelconque des revendications 1 à 9.

## Claims

1. Tyre tread for civil engineering works vehicle, this tread having a tread surface (10) intended to come into contact with the ground, this tread comprising a central part (21) delimited by grooves (3) of circumferential overall orientation, these grooves delimiting lateral parts (22) axially towards the outside of the central part (21), each lateral part (22) being provided with a plurality of transverse grooves (6) delimiting a plurality of blocks (7), the transverse grooves (6) having a cross section of minimum area and being distributed substantially uniformly in the circumferential direction, this tread being **characterized in that** the central part (21) is provided with a plurality of channels (51) extending transversely under the tread surface (10) and passing right through the said central part (21), each channel (51) comprising a first and a second end (52, 53), these first and second ends opening into the grooves (3) of circumferential overall orientation, at least one end of each channel opening into a transverse groove (6) of the shoulder parts (22), and **in that** each channel (51) has a cross-sectional area at least equal to 5% of the area of the minimum cross section of the transverse groove (6) into which it opens.

2. Tread according to Claim 1, **characterized in that** the central part (21) further comprises a plurality of grooves (4) of transverse overall orientation uniformly distributed in the circumferential direction and delimiting, with the circumferential grooves, a plurality of blocks (5), each of these blocks comprising at least two channels (51) under the tread surface (10), each channel (51) opening into a transverse groove (6) of a shoulder part (22) and into two circumferential grooves (3).

3. Tread according to Claim 1 or according to Claim 2, **characterized in that** the mean line of each channel (51) of the central part (21) is substantially in the continuation of the mean direction of the transverse groove (6) into which it opens so that the angular offset between the mean directions of the transverse groove and of the channel is at most equal to 15 degrees.

4. Tread according to Claim 1, **characterized in that** the channels (51) have, considered in twos, substantially crossed orientations, that is to say orientations that between them make a mean angle of at least 10°, and **in that** a channel is connected at one of its ends (52, 53) to one end of another channel so as to create continuity in the volumes of air circulating through these interconnected channels.

5. Tread according to one of Claims 1 to 4, **characterized in that** the wall area of the channels in the central part is at least equal to 0.6 dm² per unit block volume expressed in dm³.

6. Tread according to one of Claims 1 to 5, **characterized in that** the channels (51) are formed at a distance from the tread surface (10) which exceeds half the thickness of this central part (21) of the tread so as to be as close as possible to the crown reinforcement.

7. Tread according to one of Claims 1 to 6, **characterized in that** the cross-sectional area of each channel is greater than or equal to 20% and at most equal to 30% of the cross-sectional area of the transverse groove into which the channel opens.

8. Tread according to any one of Claims 1 to 7, **characterized in that** the shoulder parts (22) are provided with a plurality of channels (71) that open both to the outside of the tread and into a circumferential groove (3) delimiting a shoulder part.

9. Tread according to Claim 8, **characterized in that** the number of channels (71) formed in the shoulder parts (22) exceeds the number of channels formed in the central part.

10. Tyre for civil engineering works vehicle having a carcass reinforcement (8) surmounted radially on the outside by a crown reinforcement (9), the latter being itself surmounted radially on the outside by a tread (1), this tyre being **characterized in that** it comprises a tread defined in any one of Claims 1 to 9.

## Patentansprüche

1. Reifenlauffläche für Tiefbau-Arbeitsmaschine, wobei diese Lauffläche eine Laufoberfläche (10) besitzt, die dazu bestimmt ist, mit dem Boden in Kontakt zu gelangen, wobei diese Lauffläche einen Mittelteil (21), der durch Rillen (3) mit einer allgemeinen Orientierung in Umfangsrichtung begrenzt ist, aufweist, wobei diese Rillen seitliche Teile (22) axial außerhalb des Mittelteils (21) begrenzen, wobei jeder seitliche Teil (22) mit mehreren transversalen Rillen (6) versehen ist, die mehrere Blöcke (7) begrenzen, wobei die transversalen Rillen (6) einen Querschnitt mit minimaler Oberfläche besitzen und in Umfangsrichtung im Wesentlichen gleichmäßig verteilt sind, wobei diese Lauffläche **dadurch gekennzeichnet ist, dass** der Mittelteil (21) mit mehreren Kanälen (51) versehen ist, die sich transversal unter der Laufoberfläche (10) erstrecken und den Mittelteil (21) durchqueren, wobei jeder Kanal (51) ein erstes und ein zweites Ende (52, 53) aufweist, wobei dieses erste und dieses zweite Ende in die Rillen (3) mit einer allgemeinen Orientierung in Umfangsrichtung münden, wobei wenigstens ein Ende jedes Kanals in eine transversale Rille (6) der Schulterteile (22) mündet, und dass jeder Kanal (51) eine Oberfläche mit einem Querschnitt besitzt, der wenigstens gleich 5 % der Oberfläche des minimalen Querschnitts der transversalen Rille (6), in die er mündet, beträgt.

2. Lauffläche nach Anspruch 1, **dadurch gekennzeichnet, dass** der Mittelteil (21) außerdem mehrere Rillen (4) mit transversaler allgemeiner Orientierung besitzt, die in Umfangsrichtung gleichmäßig verteilt sind und mit den Umfangsrillen mehrere Blöcke (5) begrenzen, wobei jeder dieser Blöcke wenigstens zwei Kanäle (51) unter der Laufoberfläche (10) aufweist, wobei jeder Kanal (51) in eine transversale Rille (6) eines Schulterteils (22) und in zwei Umfangsrillen (3) mündet.

3. Lauffläche nach Anspruch 1 oder Anspruch 2, **dadurch gekennzeichnet, dass** sich die Mittellinie jedes Kanals (51) des Mittelteils (21) im Wesentlichen in der Verlängerung der mittleren Richtung der transversalen Rille (6), in die er mündet, befindet, damit der Winkelabstand zwischen den mittleren Richtungen der transversalen Rille und des Kanals höchstens gleich 15 Grad beträgt.

4. Lauffläche nach Anspruch 1, **dadurch gekennzeichnet, dass** die Kanäle (51) paarweise betrachtet im Wesentlichen gekreuzte Orientierungen haben, d. h. einen mittleren Winkel von wenigstens gleich 10 Grad bilden, und dass ein Kanal mit einem seiner Enden (52, 53) mit einem Ende eines anderen Kanals verbunden ist, um eine Kontinuität von Luftvolumina zu erzeugen, die durch diese miteinander verbundenen Kanäle zirkulieren.

5. Lauffläche nach einem der Ansprüche 1 bis 4, **dadurch gekennzeichnet, dass** die Wandoberfläche der Kanäle in dem Mittelteil wenigstens gleich 0,6 dm² pro Einheitsvolumen des Blocks, ausgedrückt in dm³, beträgt.

6. Lauffläche nach einem der Ansprüche 1 bis 5, **dadurch gekennzeichnet, dass** die Kanäle (51) in einem Abstand von der Laufflächeoberfläche (10) ausgebildet sind, der größer ist als die Hälfte der Dicke dieses Mittelteils (21) der Lauffläche, so dass sie sich am nächsten bei dem Mantel der Oberseite befinden.

7. Lauffläche nach einem der Ansprüche 1 bis 6, **dadurch gekennzeichnet, dass** die Oberfläche des Querschnitts jedes Kanals größer oder gleich 20 % und höchstens gleich 30 % der Oberfläche des Querschnitts der transversalen Rille, in die der Kanal mündet, beträgt.

8. Lauffläche nach einem der Ansprüche 1 bis 7, **dadurch gekennzeichnet, dass** die Schulterteile (22) mit mehreren Kanälen (71) versehen sind, die sowohl in die äußere Umgebung der Bahn als auch in eine Umfangsrille (3), die einen Schulterteil begrenzt, münden.

9. Lauffläche nach Anspruch 8, **dadurch gekennzeichnet, dass** die Anzahl von Kanälen (71), die in den Schulterteilen (22) ausgebildet sind, größer ist als die Anzahl von Kanälen, die im Mittelteil ausgebildet sind.

10. Reifen für Tiefbau-Arbeitsmaschine, der einen Karkassenmantel (8) besitzt, auf dem radial auswärts ein Oberseitenmantel (9) angebracht ist, wobei auf diesem Letzteren seinerseits radial auswärts eine Lauffläche (1) angebracht ist, wobei dieser Reifen **dadurch gekennzeichnet ist, dass** er eine Lauffläche umfasst, die wie in einem der Ansprüche 1 bis 9 definiert beschaffen ist.
